# EUROPEAN PATENT APPLICATION

(11) **EP 3 367 330 A1**
(43) Date of publication of application: **29.08.2018**
(21) Application number: 17157900.6
(22) Date of filing: 24.02.2017
(51) Int. Cl.: G06T 7/00, G06T 17/00, G06K 9/00

(54) **A TECHNIQUE FOR DETERMINING HEALTH OF A TEST OBJECT BY USING A GEOMETRICAL SPECIFICATION**

(71) Applicant: Siemens Aktiengesellschaft, 80333 München (DE)
(72) Inventor: JOHNSON, Rebecca, 81825 München (DE); MAC WILLIAMS, Asa, 82256 Fürstenfeldbruck (DE)

(57) **Abstract**

In the present technique, health of a test object such as a machine part is determined. In the technique, a first scan of the test object is acquired. From the first scan, geometrical data of the test object is extracted. A base match value is determined by comparing the geometrical data so extracted to geometrical data of the geometrical specification. Subsequently, after a time interval, a second scan of the test object is acquired. From the second scan, geometrical data of the test object is extracted. A test match value is determined by comparing the geometrical data so extracted to geometrical data of the geometrical specification. Finally, the base and the test match values are compared to determine the health of the test object. The geometrical data represents a physical aspect or feature of the test object. The health of the test object facilitates predictive maintenance of the test object.

## Description

The present invention relates to methods and systems for determining or examining health of a test object by using a geometrical specification.

Over time the machinery and other equipment in factories deteriorates, through corrosion or simple wear and tear resulting from use. When a part of a machinery or equipment finally breaks down or gets damaged, repair or replacement services are required to regain optimal functioning of the machinery or other equipment used in a factory set up like manufacturing plants, power production facilities, refineries, mills, storage facilities, etc. However, sudden break down of a machine or machine part or other objects forming the part of equipment can cause safety issues, or lead to further components being broken and cause financial losses due to resulting down-time. Presently, the machine parts, machines, and similar other equipment are continuously or periodically checked manually or through a number of monitoring systems, for example including sensors associated with the machine parts or the machinery, to monitor changes in the performance of the machine parts, machines, and other equipment.

One way to obviate long down-times would be to perform predictive maintenance of the machine parts, machines, and other equipment. The predictive maintenance can be performed by determining health of the machine parts, machines, and other equipment, prior to occurrence of a breakdown of the machine parts, machines, or the other equipment. The health so determined is indicative of a state or quality of the machine or machine part in respect of its suitability to optimal future functioning. However, determining of the health of the machine parts or machines is cumbersome and complicated. Therefore, there exists a need for a technique to determine health of machine parts, machines and other such equipment and their components, hereinafter also referred to as test object, in a simple, time efficient and cost effective way.

Thus an object of the present invention is to provide a technique, in particular a method and a system for determining health of a test object. The present technique determines the health of the test object by using a geometrical specification of the test object.

The above object is achieved by a method for determining health of a test object by using a geometrical specification according to claim 1 of the present technique and a system for determining health of a test object by using a geometrical specification according to claim 6 of the present technique. Advantageous embodiments of the present technique are provided in dependent claims.

In a first aspect of the present technique a method for determining health of a test object by using a geometrical specification is presented. The 'health' of the test object as used herein includes or represents a state of the test object, in which the test object either may be further continued to be used in its field of application or in which the test object may not be suitable for immediate or future further use and thus has to be replaced or maintained or repaired immediately or after a calculated or selected time interval. For example a pulley, for a conveyor belt, is required to be circular for smooth functioning of the conveyor belt, however the pulley, due to use or other adverse factors, may be in different 'health' states, such as - acceptably circular for continued future use, or deformed but still capable of acceptable functioning for a specific period of time and then requiring replacement/repair, or deformed to an extent that necessitates an immediate replacement or repair.

In the method, a first scan of the test object is acquired at a first time instance. Thereafter, geometrical data of the test object is extracted from the first scan by a processor. Afterwards, a base match value is determined by comparing the geometrical data of the test object extracted, by the processor, from the first scan to geometrical data of the geometrical specification. Then, a second scan of the test object at a second time instance is acquired. The second time instance is chronologically subsequent to the first time instance. As a next step, geometrical data of the test object is extracted, by the processor, from the second scan. Subsequently, a test match value by comparing, using the processor, the geometrical data of the test object extracted from the second scan to the geometrical data of the geometrical specification is determined. Finally, the test match value is compared, using the processor, to the base match value to determine the health of the test object.

The geometrical specification of an object usually includes a description of its geometry as well as associated tolerances. It describes measurement, shape and position as well as the relation between those three. Depending on each case it can describe two or three dimensions. Such measurement and tolerance values can be available for every area or edge of the object. In the case of processing with a computer, the geometrical specification is present in a computer file. The computer file can for example include CAD data, which includes not only geometry but also tolerance values. Geometrical specifications are, for example, defined by the international norm DIN EN ISO 8015. Such norm can build the basis of any geometrical specification, especially drawings and are usable for 3D models.

The geometrical specification of the test object is an ideal or desired model or representation of the test object and may be two or three dimensional. The geometrical specification may for example be the model or design used to manufacture the test object, and thus may be a representation of the test object that contains all requirements, tolerances and specifics regarding measurements, shape and geometry of the test object. On the other hand, the geometrical data of the test object is included in the geometrical specification of the test object and may be understood as one or more features, such as a length measurement, an angular measurement, a shape, a contour and so on and so forth of a part or area or portion or edge of the test object and that is determinable from the geometrical specification. For example, if the test object is a wheel, the geometrical specification may be a three dimensional representation of the wheel for example a CAD model, whereas the geometrical data may be measurements about the circularity of the wheel and/or the size of the wheel determinable from the geometrical specification of the wheel.

With respect to the first and/or the second scan, the geometrical data of the test object is included in the first and/or the second scan of the test object and may be understood as one or more features, such as a length measurement, an angular measurement, a shape, a contour and so on and so forth of a part or area or portion or edge of the test object and that is determinable from the first and/or the second scan. For example, if the test object is a wheel, the first and/or the second scan may be a 2-dimensional representation of the wheel for example an image of the wheel, whereas the geometrical data with respect to the first and/or the second scan may be measurements about the circularity of the wheel and/or the size of the wheel determinable from the first and/or the second scan.

A match value is a representation that indicates accordance or conformity or degree or percentage of equivalence or difference of a selected feature i.e. the geometrical data, such as circularity of a wheel or length of an edge, when compared as it, i.e. the selected feature, exists in the geometrical specification and as it i.e. the selected feature, exists in the first or the second scan of the test object. The base match value is the match value when geometrical data is compared between the geometrical specification and the first scan, whereas the test match value is the match value when geometrical data is compared between the geometrical specification and the second scan.

In the method, the test match value is compared to the base match value and this indicates a level or degree of deterioration in a given geometrical data for a time period limited by the first time instance and the second time instance and thus determines the health of the test object.

When the test object is being evaluated by the aforementioned method, the health of the test object, as a comparison between the first and the second time instance, can be determined economically and rapidly. The output of the method tells the user to how much or to what degree the match between the geometrical specification and the test object changed from the first time instance to the second time instance, which allows for determination or prediction of any insufficiency or wear and tear or deterioration in the test object at the second time instance or for future. The user therefore can either allow functioning of the test object as it is or replace/repair the test object or place the test object under observation. This early recognition, i.e. before the test object or a part of the test object actually breaks down, provides for good preparation in case the test object has to be replaced or repaired. The method is easy to implement as it requires already existing or easily generatable geometrical specification and easily obtainable the first and the second scan which can be performed by a simple scanning device such as a mobile imaging unit for example a mobile camera or a simple laser scanner.

In an embodiment of the method, the geometrical specification is one of a CAD model, an edge model and a boundary surface model of the test object. In another embodiment of the method, the geometrical specification is generated chronologically before the first time instance, for example during designing and manufacturing phase of the test object.

In another embodiment of the method, the first scan and/or the second scan is one of a laser scan and a photogrammetric scan. This provides for an easy way of implementing the method and for high resolution scans. It is also a cost effective way to acquire a scan of the test object as laser scanners for generating laser scans and imaging devices for generating photogrammetric scan are readily and economically available.

In another embodiment of the method each of the geometrical data extracted from the first scan, the geometrical data extracted from the second scan and the geometrical data of the geometrical specification corresponds to aspects of a contour of the test object. Thus, the method is easy to be applied in several applications, since basically every test object comprises a contour. It is also an easy way to compare the geometrical specification to the test object expressed in the first and/or the second scan.

In a second aspect of the present technique, a system for determining health of a test object by using a geometrical specification is presented. The system includes one or more scanning devices, that are configured to acquire one or more scans of the test object. The system further includes a processor. The processor is configured:
- to extract geometrical data of the test object from a first scan of the test object acquired by the scanning device at a first time instance;
- to determine a base match value by comparing the geometrical data of the test object extracted from the first scan to geometrical data of the geometrical specification;
- to extract geometrical data of the test object from a second scan of the test object that is acquired by the scanning device at a second time instance, the second time instance being chronologically subsequent to the first time instance;
- to determine a test match value by comparing the geometrical data of the test object extracted from the second scan to the geometrical data of the geometrical specification; and
- to compare the test match value to the base match value to determine the health of the test object.

In an embodiment of the system, the system includes a memory module. The memory module is configured to store and/or to provide at least one of the following to the processor: the geometrical specification, the first scan, the geometrical data of the test object extracted from the first scan, the second scan, the geometrical data of the test object extracted from the second scan, the base match value, and the test match value. Therefore, the system can be used for multiple time instances and multiple test objects.

In another embodiment of the system, the geometrical specification is one of a CAD model, an edge model and a boundary surface model of the test object. The geometrical specification is generated chronologically before the first time instance.

In another embodiment of the system, the one or more scanning device is configured to generate one of a laser scan and a photogrammetric scan. In a related embodiment of the system, the one or more scanning device is a laser scanner, a camera, a video camera, and a mobile unit having a laser scanning module and/or a camera. This offers a simple and economical way to construct the system. A mobile unit would facilitate the system even further, since it provides a way to use the system in a more flexible way. It also allows moving and using the system at various different locations.

In another embodiment of the system, the processor is incorporated into the one or more scanning devices. Therefore, the system is more compact.

In another embodiment of the system, the processor is incorporated in a computer, for example a desktop computer or a notebook. The computer comprises a data interface and is configured to receive the first scan and/or the second scan from the scanning device. This permits easy installation of the system in any factory or plant and also provides a way to easily connect the system with other monitoring and control applications.

In another embodiment of the system the processor is incorporated in a server, particularly a cloud server. This makes the system more flexible. Several users can be connected to the same processor, which provides an efficient way to use the system.

In a third aspect of the present technique, a computer-readable storage media is presented. The computer-readable storage media has thereon stored instructions that are executable by one or more processors of a computer system. The execution of the instructions causes the computer system to perform the method according to any embodiment of the first aspect of the present technique.

In a fourth aspect of the present technique, a computer program, which is being executed by one or more processors of a computer system and performs the method according to any embodiment of the first aspect of the present technique.

The present technique is further described hereinafter with reference to illustrated embodiments shown in the accompanying drawing, in which:
- FIG 1: depicts a flow chart representing an exemplary embodiment of a method of the present technique;
- FIG 2: schematically illustrates an exemplary embodiment of a system of the present technique;
- FIG 3: schematically illustrates an exemplary embodiment of working of the arrangement of FIG 2 at a first time instance; and
- FIG 4: schematically illustrates an exemplary embodiment of the working of the arrangement of FIG 2 at a second time instance, in accordance with the aspects of the present technique.

Hereinafter, above-mentioned and other features of the present technique are described in details. Various embodiments are described with reference to the drawing, wherein like reference numerals are used to refer to like elements throughout. In the following description, for purpose of explanation, numerous specific details are set forth in order to provide a thorough understanding of one or more embodiments. It may be noted that the illustrated embodiments are intended to explain, and not to limit the invention. It may be evident that such embodiments may be practiced without these specific details.

It may be noted that in the present disclosure, the terms "first", "second", etc. are used herein only to facilitate discussion, and carry no particular temporal or chronological significance unless otherwise indicated.

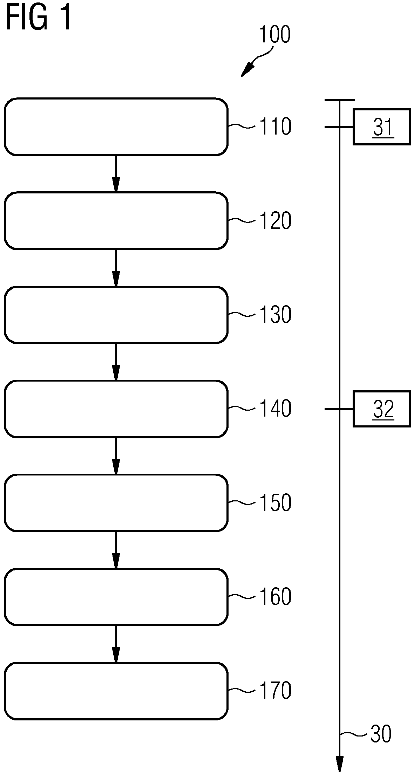

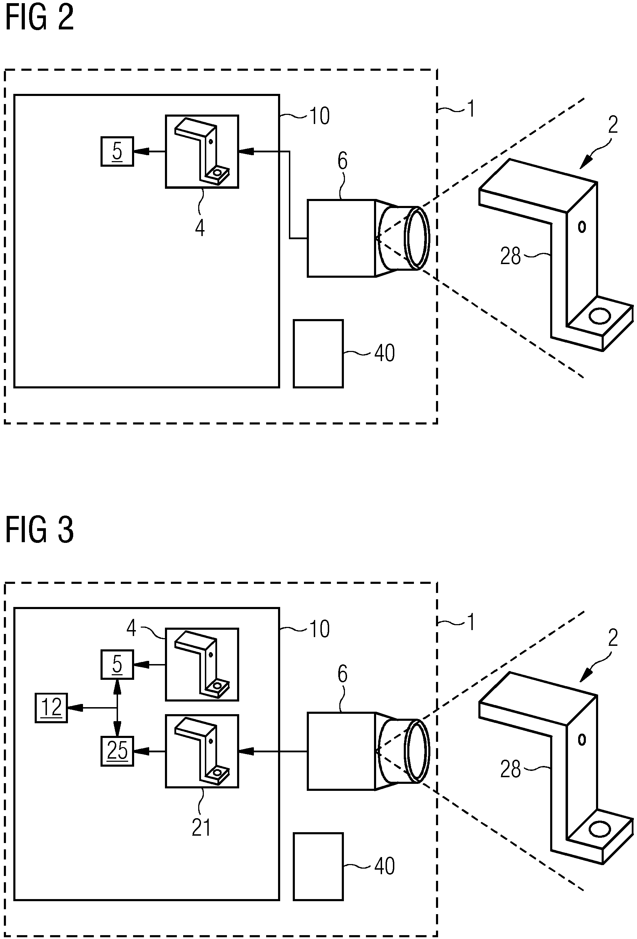

FIG 1 depicts a flow chart representing an exemplary embodiment of a method 100 of the present technique and FIG 2 schematically represents a system 1 for implementing the method 100 for determining health of a test object 2 by using a geometrical specification 4. The system 1 and the steps of embodiments of the method 100 have been explained hereinafter with reference to FIGs 1, 2, 3, and 4. As shown in FIGs 2 to 4, the system 1 includes one or more scanning devices 6, although only one scanning device 6 has been depicted in FIGs 2 to 4, and a processor 10.

The basic idea of the present technique of the method 100 and the system 1 for implementing the method 100 is to acquire a scan, namely a first scan 21, of a test object 2 for example a wheel, a pulley, a cover of an appliance or machine or machine part, a rotatable or a stationary part of an appliance or machine or machine part, etc at a time instance, namely a first time instance 31. This is exemplarily shown in FIG 3 wherein the test object 2 is depicted as 'Z' shaped metal connector bracket. The scan 21, i.e. the first scan 21, may be a photograph or a 2D image or a laser scan and the first time instance 31 is a time instance at which observation of the test object 2 under the aforementioned method 100 begins. The first time instance 31 for example may be a time of deployment of the test object 2 for its intended use or a time when use of the test object 2 is commenced or any time after the use of the test object 2 is commenced. The first scan 21 is compared with the geometrical specification 4, and particularly a physical feature, i.e. a geometrical data 25, of the first scan 21 is compared to a physical feature, i.e. a geometrical data 5, of the geometric specification 4. The geometrical data 25 and the geometrical data 5 correspond to each other, i.e. the if the test object 2 is a wheel, and if one geometrical data 25 is a circularity of the wheel then the geometrical data 5 compared with the one geometrical data 25 is also the circularity of the wheel, whereas if another geometrical data 25 is diameter of the wheel then the geometrical data 5 compared with the another geometrical data 25 is also the diameter of the wheel.

As aforementioned the geometrical specification 4 may be a 3D model or a 2D representation of the test object 2 that represents physical features of the test object 2 such as shape, size, and measurements etc as the test object 2 should be prior to any wear and tear due to use or other adverse influences such as corrosive environment where the test object 2 is positioned or placed. The geometrical data 25 may be a collection of physical features and the geometrical data 5 is a collection of corresponding features. In comparing the geometrical data 25 to the geometrical data 5 one or more such features may be compared simultaneously or successively. As a result of this comparison between the geometrical data 25 and the geometrical data 5, a match value, namely base match value 12, as aforementioned, is obtained. For example of the wheel, the base match value 12 obtained by comparing geometrical data 25 with the geometrical data 5 corresponding to the circularity of the wheel may be say 80% meaning thereby that the wheel is 80% circular as seen in the first scan 21 in comparison to the circularity of the wheel as obtained from the geometrical specification 4. The base match value 12 is used thereafter as a reference to determine the health of the wheel later at a second time instance 32.

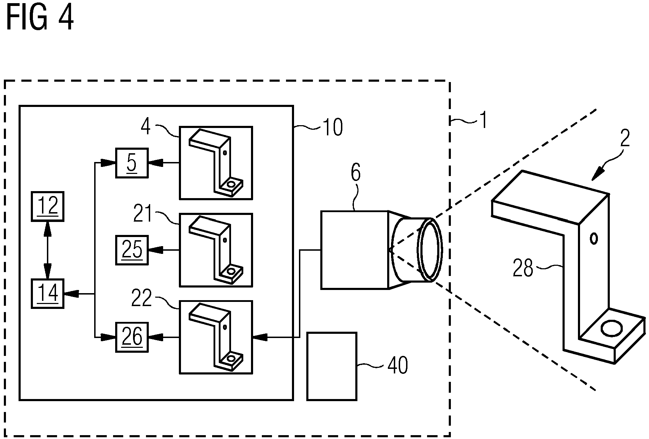

Thereafter, in the method 100, another scan, i.e. a second scan 22, of the test object 2 for example the 'Z' shaped connector metal bracket, or the wheel, continuing the above example, is acquired at a time instance, i.e. a second time instance 32. This has been exemplarily shown in FIG 4. The scan 22, i.e. the second scan 22 is same as the scan 21 i.e. may be a photograph or a 2D image or a laser scan. The second time instance 32 is a time instance at which subsequent observation of the test object 2 under the aforementioned method 100 is performed. The second time instance 32 is later than the first time instance 31, for example the second time instance 32 may be one or more days later, or one or more weeks later, or one or more months later, or one or more years later from the first time instance 31. The time gap between the first time instance 31 and the second time instance 32 is chosen by a user of the method 100 or may be prefixed depending on the test object 2 and the type, history and/or intensity of use of the test object 2.

The second scan 22 is compared with the geometrical specification 4, and particularly a physical feature, i.e. a geometrical data 26, of the second scan 22 is compared to a physical feature, i.e. a geometrical data 5, of the geometric specification 4. The geometrical data 26, the geometrical data 25 and the geometrical data 5 correspond to each other, i.e. for example where the test object 2 is a wheel, and if the geometrical data 25 compared earlier was a circularity of the wheel then the geometrical data 26 compared with the geometrical data 5 is also the circularity of the wheel. Similar to the geometrical data 25, the geometrical data 26 may be a collection of physical features and the geometrical data 5 is a collection of corresponding features. In comparing the geometrical data 26 to the geometrical data 5 one or more such features may be compared simultaneously or successively, and may emulate the comparison of features performed earlier between the geometrical data 25 and the geometrical data 5. As a result of this comparison between the geometrical data 26 and the geometrical data 5, a match value, namely test match value 14, as aforementioned, is obtained. For example of the wheel, the test match value 14 obtained by comparing geometrical data 26 with the geometrical data 5 corresponding to the circularity of the wheel may be say 50% meaning thereby that the wheel is 50% circular as seen in the second scan 22 in comparison to the circularity of the wheel as obtained from the geometrical specification 4.

Thereafter, the test match value 14 is compared to the base match value 12, the base match value 12 being used as the reference to determine the change in physical features that the wheel i.e. the test object 2 has suffered in the time interval between the first time instance 31 and the second time instance 32. In the present example the circularity of the wheel changed from 80% equivalence to the geometrical specification 4 to 50% equivalence to the geometrical specification 4. This gives a determination of the health of the wheel as progressed from the first time instance 31 to the second time instance 32. Based on the health determination a decision can be made on a further action regarding the test object 2 which may be to continue use after the second time instance 32 without any repair or replacement or maintenance activity till a next scheduled observation, or to repair or replace it immediately, or to repair or replace it after a decided time interval, or to make another observation or determination of health before the scheduled observation.

In the method 100, in a step 110 the first scan 21 of the test object 2 is acquired at the first time instance 31. In the step 110 one or more of the first scans 21 may be acquired, and the acquired first scans 21 may be from different angles or using different scanning techniques or image acquisition techniques by using different scanning devices 6. In FIG 1, reference numeral 30 depicts a time lime and the first time instance is depicted by reference numeral 31 on the time line 30 of FIG 1. For the timeline 30, the arrowhead depicts direction of progress if time i.e. from an earlier time instance towards a later time instance.

From the first scan 21 acquired in the step 110, in a next step 120 of the method 100 the processor 10 (shown in FIGs 2 to 4) extracts the geometrical data 25 of the test object 2 from the first scan 21. The processor 10 extracts the geometrical data 25 of the test object 2 by using various algorithms and technique that are generally known in the art of feature extraction from images and scans, for example by the use of methods of digital image processing, pattern recognition or photogrammetry, and thus have not been described herein in further details for sake of brevity. Thereafter, in a third step 130 of the method 100, the processor 10 uses the geometrical data 25, extracted from the first scan 21, of the test object 2, and compares the geometrical data 25 to the geometrical data 5 of the geometrical specification 4 and determines the base match value 12 as an outcome of the comparison in the step 130 as is schematically depicted in FIG 3.

The base match value 12 may be a value between 0 and 1 or 0 % and 100 % respectively, depending on the degree or level or extent of agreement between the geometrical data 25 obtained from the first scan 21 and the geometrical data 5 obtained from the geometrical specification 4. If the base match value 12, for example, is 100% the geometrical data 25 of the first scan 21 is in complete accordance to the geometrical data 5 of the geometrical specification 4. The base match value 12 forms a reference for comparing the future determination of health of the test object 2.

Thereafter, in a step 140, at least a second scan 22 of the test object 2 at a second time instance 32 is acquired as shown in FIG 1 and FIG 4. As shown on the timeline 30 depicted in FIG 1, the second time instance 32 is chronologically subsequent to the first time instance 31 or in other words the first time instance 31 is chronologically before the second time instance 32, or simply stated the second time instance 32 is after the first time instance 31. In the time interval between the time instances 31, 32, the test object 2 may have been further used or been subjected to adverse conditions for example corrosion or improper storage etc and thus is further examined in the present technique. Subsequently, in a step 150, the processor 10 extracts geometrical data 26 from the second scan 22. After the step 150, in a step 160 of the method 100, the processor 10 determines the test match value 14. The test match value 14 is obtained by comparing the geometrical data 26 of the test object 2 extracted from the second scan 22 to the geometrical data 5 of the geometrical specification 4. Similar to the base match value 12, the test match value 14 may be between a range of 0 and 1 or 0 % and 100 % respectively, wherein a value of 0 % for example may represent no conformity between the geometrical data 5 of the geometrical specification 4 and the geometrical data 26 of the second scan 22 whereas a value of 100 % for example may represent full conformity between the geometrical data 5 of the geometrical specification 4 and the geometrical data 26 of the second scan 22.

After the base match value 12 and the test match value 14 have been calculated or determined by the processor 10, the processor 10 compares, in a next step 170, the test match value 14 to the base match value 12, and the result of the comparison performed in the step 170 represents or is indicative of the health of the test object 2 at the second time instance 32 and/or in indicative of a progress in health of the test object 2 over the time interval between the first time instance 31 and the second time instance 32.

As can be appreciated by a person skilled in the art, in the present technique, the steps 120 to 170 may be repeated several times at different time instances, whereby a set of any two time instances form the first and the second time instances 31, 32. Furthermore, the method 100 may be performed with a plurality of each of the first and the second scans 21,22 of the test object 2, and may provide different health determinations for different physical aspects of the test object 2.

The one or more of the first scan 21 and/or the one or more of the second scans 22 of the test object 2 may be laser scans or a photogrammetric scan. The geometrical data 5,25,26 extracted from the first scan 21, the second scan 22, and the geometrical specification 4 of the test object 2, correspond to same set of physical aspects of the test object 2 such as a contour of the test object 2 as shown in FIG 4. The contour may herein exemplarily be understood as one or more edges 28 of the test object 2 as shown in FIG 4.

The health of the test object 2 allows the user of the method 100 to make a decision on predictive maintenance, repair or replacement of the test object 2. The decision may be made by the user based on personal expertise and knowledge or guided by rules. The decision may also be proposed or provided by the processor 10 based on rules. An exemplary set of rules for test objects 2, namely 'I', 'II' and 'III' which may for example be three different pulleys in a conveyor belt system, and wherein the circularity is the pulleys is the physical feature i.e. geometrical data being evaluated, may be:
Rule 1: Health or confidence level: 'Satisfactory' if the difference between the base match value 12 and the test match value 14 is less than 15 %, proposed action or decision: No replacement, repair or maintenance required.
Rule 2: Health or confidence level: 'Critical' if the difference between the base match value 12 and the test match value 14 is more than 15 % but less than 30 %, proposed action or decision: Replacement, repair or maintenance required within 15 days.
Rule 3: Health or confidence level: 'Damaged' if the difference between the base match value 12 and the test match value 14 is more than 30 %, proposed action or decision: Replacement, repair or maintenance required immediately.

Based on the above set of rules, the health determination of the test objects 2 resulting from the use of method 100 is shown in Table 1 below:

**Table 1**

| Test Object (2) | Base Match Value (12) | Test Match Value (14) | Health / Decision |
|---|---|---|---|
| I | 98 % | 85 % | Satisfactory, No replacement, repair or maintenance required |
| II | 75 % | 35 % | Damaged, to be replaced |
| III | 95 % | 70 % | Critical, to be replaced within 15 days |
| ... | ... | ... | ... |

Thus, by the method 100 in accordance with the aspects of the present technique, the test object 2 may be monitored and repair or maintenance or replacement may be performed before the test object 2 breaks down.

Hereinafter further embodiments of the method 100 and/or system 1 are detailed. The processor 10 of the system 1 may be an independent processing module or may be incorporated in a computer, notably a desktop computer or a notebook. The geometrical specification 4 may be provided to the processor 10 externally, i.e. from outside the system 1, or as shown in FIGs 2 to 4, the processor 10 may generate the geometrical specification of the test object 2, by using the scanning device 6 prior to the first time instance. The geometrical specification 4 may be a CAD model, an edge model, a boundary surface model, or any other three- or two- dimensional representation or dataset for the test object 2.

The one or more scanning devices 6 in the system 1 are configured to acquire one or more scans 21,22 of the test object 2 and may be any of a laser scanner, a camera, a video camera, and a mobile unit having a laser scanning module and/or a camera. Furthermore, the first scan 21 and the second scan 22 of the test object 2 may be a laser scan or a photogrammetric scan, and the one or more scanning devices 6 are configured to generate a laser scan or a photogrammetric scan, either on a prompt or command by a user or automatically at scheduled times. The scanning device 6 may be connected to the processor 10 by a data interface, e.g. by wire or wireless, for example by WiFi. The processor 10 may also include a data interface to receive the first scan 21 and the second scan 22 from the scanning device 6. The processor 10 may exemplarily be included in a server, e.g. a cloud server. Alternatively, the processor 10 may also be incorporated in the scanning device 6.

In FIG 2, the system 1 is depicted at a time instance chronologically before the first time instance 31. The time instance before the first time instance 31 can exemplarily be when the test object 2 was manufactured and may therefore represent the health of the test object 2 at 100%. The processor 10 may acquire one or more images or a scans of the test object 2 and store, or reconstruct and store, the geometrical specification 4.

The system 1 may further include a memory module 40 in communication with the processor 10, and optionally in communication with the scanning device 6. The memory module may be configured to store the geometrical specification 4, the first scan 21 and/or the second scan 22 of the test object 2. The memory module 40 may further be configured to store the geometrical data 5 extracted from the geometrical specification 4, the geometrical data 25 of the test object 2 extracted from the first scan 21, and/or the geometrical data 26 of the test object 2 extracted from the second scan 22, the base match value 12, and the test match value 14. The memory module 40 may further be configured to provide any of aforementioned store information to the processor 10 during performance of the different steps of the method 100.

While the present technique has been described in detail with reference to certain embodiments, it should be appreciated that the present technique is not limited to those precise embodiments. Rather, in view of the present disclosure which describes exemplary modes for practicing the invention, many modifications and variations would present themselves, to those skilled in the art without departing from the scope and spirit of this invention. The scope of the invention is, therefore, indicated by the following claims rather than by the foregoing description. All changes, modifications, and variations coming within the meaning and range of equivalency of the claims are to be considered within their scope.

## Claims

1. A method (100) for determining health of a test object (2) by using a geometrical specification (4), the method (100) comprising:
- acquiring (110) at least a first scan (21) of the test object (2) at a first time instance (31);
- extracting (120), by a processor (10), geometrical data (25) of the test object (2) from the first scan (21);
- determining (130), by the processor (10), a base match value (12) by comparing the geometrical data (25) of the test object (2) extracted from the first scan (21) to geometrical data (5) of the geometrical specification (4);
- acquiring (140) at least a second scan (22) of the test object (2) at a second time instance (32), wherein the second time instance (32) is chronologically subsequent to the first time instance (31);
- extracting (150), by the processor (10), geometrical data (26) of the test object (2) from the second scan (22);
- determining (160), by the processor (10), a test match value (14) by comparing the geometrical data (26) of the test object (2) extracted from the second scan (22) to the geometrical data (5) of the geometrical specification (4); and
- comparing (170), by the processor (10), the test match value (14) to the base match value (12) to determine the health of the test object (2).

2. The method (100) according to claim 1, wherein the geometrical specification (4) is one of a CAD model, an edge model and a boundary surface model of the test object (2).

3. The method (100) according to claim 1 or 2, wherein the geometrical specification (4) is generated chronologically before the first time instance (31).

4. The method (100) according to any of claims 1 to 3, wherein the first scan (21) and/or the second scan (22) is one of a laser scan and a photogrammetric scan.

5. The method (100) according to any of claims 1 to 4, wherein each of the geometrical data (25) extracted from the first scan (21), the geometrical data (26) extracted from the second scan (22) and the geometrical data (5) of the geometrical specification (4) corresponds to aspects of a contour of the test object (2).

6. A system (1) for determining health of a test object (2) by using a geometrical specification (4), the system (1) comprising:
- one or more scanning devices (6) configured to acquire one or more scans (21, 22) of the test object (2), and
- a processor (10) configured to:
- extract geometrical data (25) of the test object (2) from a first scan (21) of the test object (2) acquired by the scanning device (6) at a first time instance (31);
- determine a base match value (12) by comparing the geometrical data (25) of the test object (2) extracted from the first scan (21) to geometrical data (5) of the geometrical specification (4);
- extract geometrical data (26) of the test object (2) from a second scan (22) of the test object (2) acquired by the scanning device (6) at a second time instance (32), wherein the second time instance (32) is chronologically subsequent to the first time instance (31);
- determine a test match value (14) by comparing the geometrical data (26) of the test object (2) extracted from the second scan (22) to the geometrical data (5) of the geometrical specification (4); and
- compare the test match value (14) to the base match value (12) to determine the health of the test object (2).

7. The system (1) according to claim 6, comprising a memory module (40) configured to store and/or to provide to the processor (10) at least one of the geometrical specification (4), the first scan (21), the geometrical data (25) of the test object (2) extracted from the first scan (21), the second scan (22), the geometrical data (26) of the test object (2) extracted from the second scan (22), the base match value (12), and the test match value (14).

8. The system (1) according to claim 6 or 7, wherein the geometrical specification (4) is one of a CAD model, an edge model and a boundary surface model of the test object (2).

9. The system (1) according to any of claims 6 to 8, wherein the one or more scanning devices (6) is configured to generate one of a laser scan and a photogrammetric scan.

10. The system (1) according to claim 9, wherein the one or more scanning devices (6) is a laser scanner, a camera, a video camera, and a mobile unit having a laser scanning module and/or a camera.

11. The system (1) according to any of claims 6 to 10, wherein the processor (10) is incorporated into the one or more scanning device (6).

12. The system (1) according to any of claims 6 to 10, wherein the processor (10) is incorporated in a computer, the computer comprising a data interface and configured to receive the first scan (21) and/or the second scan (22) from the scanning device (6).

13. The system (1) according to any of claims 6 to 10, wherein the processor (10) is incorporated in a server.

14. A computer-readable storage media having stored thereon: instructions executable by one or more processors (10) of a computer system, wherein execution of the instructions causes the computer system to perform the method (100) according to any one of the claims 1 to 5.

15. A computer program, which is being executed by one or more processors (10) of a computer system and performs the method (100) according to any one of the claims 1 to 5.
